# EUROPÄISCHE PATENTSCHRIFT

(11) **EP 1 970 263 B1**
(45) Veröffentlichungstag und Bekanntmachung des Hinweises auf die Patenterteilung: **08.12.2010**
(21) Anmeldenummer: 08004644.4
(22) Anmeldetag: 13.03.2008
(51) Int. Cl.: B60R 21/215, B23K 26/38, B23K 26/40

(54) **Verfahren zur Herstellung eines mindestens zweischichtigen Fahrzeuginnenverkleidungsteils mit integrierter Airbagabdeckung und Fahrzeuginnenverkleidungsteil**
Method for producing an automobile interior lining with at least two layers with integrated airbag cover and automobile interior lining
Procédé de fabrication d'au moins deux éléments d'habillage intérieur de véhicule à deux couches dotés d'un recouvrement d'airbag intégré et élément d'habillage intérieur de véhicule

(30) Priorität: 15.03.2007 DE 102007013108
(43) Veröffentlichungstag der Anmeldung: 17.09.2008
(73) Patentinhaber: JENOPTIK Automatisierungstechnik GmbH, 07745 Jena (DE)
(72) Erfinder: Griebel, Martin, 07743 Jena (DE); Lutze, Walter, 07751 Drackendorf (DE); Schadeberg, Thomas, 07749 Jena (DE); Marrè, Marcus, 07743 Jena (DE); Seidel, Frank, 07646 Stadtroda (DE)
(74) Vertreter: Schaller, Renate

(56) Entgegenhaltungen:
- EP-A- 0 967 066
- DE-B3-102006 054 592
- US-A1- 2005 134 023

## Beschreibung

Die Erfindung betrifft ein Verfahren zur Herstellung eines mindestens zweischichtigen Fahrzeuginnenverkleidungsteils mit integrierter Airbagabdeckung, bestehend aus mindestens einer Öffnungsklappe, deren Kontur durch den Verlauf einer Sollbruchlinie bestimmt wird, die mittels Laser eingebracht wird.

Die Erfindung betrifft auch ein mit einem erfindungsgemäßen Verfahren hergestelltes Fahrzeuginnenverkleidungsteil.

Verkleidungsteile wie Instrumententafeln oder Lenkradkappen, hinter denen ein Airbagmodul untergebracht ist, sind bei hochwertigeren Fahrzeugen häufig mehrschichtig ausgeführt. Dabei ist die unterste, dem Airbagmodul zugewandte Schicht eine steife, dem Verkleidungsteil seine Form gebende Trägerschicht, meist aus Kunststoff, z. B. Polypropylen (PP) mit oder ohne Glasfaserverstärkung, oder einem Holzformstoff, durch Ur- oder Umformverfahren hergestellt. An diese Trägerschicht grenzt entweder mittelbar über eine Zwischenschicht oder unmittelbar eine Dekorschicht an.
Die Zwischenschicht und die Dekorschicht haben die Aufgabe, einen dem jeweiligen Fahrzeugstandard angepassten visuellen und taktilen Gesamteindruck zu vermitteln.
Die Zwischenschicht ist eine weiche, komprimierbare Schicht geringer Dichte, z. B. aus Schaumstoff oder einem Fasergewirk.
Die Dekorschicht ist in der Regel eine feste, strapazierfähige Schicht und kann aus Kunststoff, z. B. thermoplastisches Polyolyfin (TPO), Polyuretan (PU) oder Polyvenylchlorid (PVC), einem Leder oder einem textilen Material sein.
Die Entscheidung, welche Materialen für die einzelnen Schichten ausgewählt werden, wird vorrangig aus ästhetischen Gesichtspunkten getroffen.

Damit beim Aktivieren des Airbagmoduls zuverlässig eine Öffnung freigegeben wird, durch welche sich der Airbagsack ungehindert in den Fahrgastraum hinein entfalten kann, wird gemäß dem Stand der Technik durch örtlichen Materialabtrag eine Sollbruchlinie in das Fahrzeugverkleidungsteil eingebracht, die in ihrem Verlauf eine oder mehrere, die Airbagabdeckung bildenden, Öffnungsklappen beschreibt.

Diese Sollbruchlinie muss im Bedarfsfall mit einer reproduzierbaren und möglichst geringen, definierten Aufreißkraft aufgebrochen werden können. Gleichzeitig soll die Airbagabdeckung dem Airbagmodul einen mechanischen Schutz gegen spontane nicht unfallbedingte Schlageinwirkungen bieten, weshalb die notwendige Aufreißkraft ein Minimum nicht unterschreiten darf.
Über diese technischen Forderungen hinaus soll die Sollbruchlinie auch ästhetischen Forderungen genügen, indem sie auch langfristig durch die Fahrzeuginsassen nicht wahrnehmbar bleibt.

Aus dem Stand der Technik bekannte Sollbruchlinien werden von einer kontinuierlichen Nut oder einer Aneinanderreihung von Nuten oder Löchern (Sacklöcher oder Mikroperforationslöcher) beziehungsweise Kombinationen hiervon gebildet. Die Abtragstiefe kann konstant sein oder aber über die Länge der Sollbruchlinie einem bestimmten Regime folgend variieren.

Für die nachfolgenden Erläuterungen soll der Begriff Schwächelinie verwendet werden für einen linienförmigen Materialabtrag in nur einer Materialschicht. Eine Sollbruchlinie wird durch die Überlagerung der Schwächelinien der einzelnen Schichten im fertigen Schichtaufbau des Fahrzeuginnenverkleidungsteils gebildet.
Für eine Schwächelinie in der Dekorschicht treffen die genannten Ausführungsformen für die Sollbruchlinie analog zu, während die Schwächelinie in der Trägerschicht auch durch Schlitze oder Durchgangslöcher gebildet werden kann.

Die Vielzahl von Patenten, die sich die Aufgabe stellen, ein geeignetes Verfahren zu finden, um eine solche Sollbruchlinie herzustellen, ist ein Spiegelbild der technologischen Schwierigkeiten, die hierbei auftreten. Diese ergeben sich insbesondere durch die unterschiedlichen physikalischen Eigenschaften des Schichtaufbaus, die insbesondere eine gemeinsame Bearbeitung erschweren.

Aus Sicht der Reihenfolge der Verfahrensschritte: Herstellen des Schichtaufbaus und Einbringen der Sollbruchlinie, lassen sich die bekannten Verfahren grundsätzlich in drei Gruppen aufteilen.
➢ Separates Einbringen einer Schwächelinie in die Träger- und die Dekorschicht und anschließendes Zusammenfügen der Schichten zum Schichtaufbau des Verbundteiles
➢ Einbringen einer Schwächelinie in die Trägerschicht in Form eines Spaltes beziehungsweise Schlitzes, Zusammenfügen der Schichten zum Schichtaufbau und Erzeugen einer Schwächelinie in die Dekorschicht durch den Spalt beziehungsweise Schlitz hindurch
➢ Zusammenfügen der einzelnen Schichten zum Schichtaufbau und Einbringen einer Sollbruchlinie

Bei der erstgenannten Gruppe von Verfahren werden Schwächelinien jeweils separat in das Trägermaterial und das Dekormaterial eingebracht. Dabei können für das jeweilige Material vorteilhafte unterschiedliche technologische Verfahren oder unterschiedliche Verfahrensparameter ausgewählt werden. Die Schwierigkeit bei derartigen Verfahren besteht darin, dass die beiden Schwächelinien deckungsgleich erzeugt und exakt übereinander liegend zusammengefügt werden müssen, um gemeinsam eine Sollbruchlinie definierter Aufreißkraft zu bilden.
In der EP 0 711 627 A1 ist ein derartiges Verfahren beschrieben, bei dem die Schwächelinie in die Dekorschicht mittels Laser erzeugt wird. Es wird erwähnt, dass die Nuttiefe sorgfältig gesteuert werden muss, um einen zuverlässigen Bruch der Dekorschicht zum genau richtigen Zeitpunkt zu bewirken.

Ein Verfahren der zweitgenannten Gruppe ist aus dem Europäischen Patent EP 0 967 066 B1 bekannt. Die Trägerschicht wird hier mit einem Spalt, der von Stegen unterbrochen sein kann, entlang der gewünschten Sollbruchlinie hergestellt.

Anschließend wird die Trägerschicht mit der Dekorschicht mittel- oder unmittelbar verbunden und die Dekorschicht wird durch den Spalt hindurch geschwächt. Als geeignete Werkzeuge werden hier der Laser, das mechanische Messer, der Ultraschall, das Heizmesser und der Wasserstrahl genannt.

Als besonderer Vorteil einer solchen Lösung gegenüber der dritten Verfahrensgruppe wird das gleichzeitige Ausbilden des Spaltes mit der Herstellung der Trägerschicht beschrieben, was eine nachträgliche materialabtragende Bearbeitung der Trägerschicht erübrigen soll. Als Vorteil wird genannt, dass die Taktzeit verringert werden kann, ein Laser geringerer Leistung verwendet werden kann und keine Maßnahmen getroffen werden müssen, um bei der Verdampfung des Trägermaterials entstehende Nebenprodukte zu handhaben.

Gegenüber der ersten Verfahrensgruppe ergibt sich der Vorteil, dass die Dekorschicht auf die Trägerschicht aufgebracht werden kann, ohne dass zuvor separat eingebrachte Schwächelinien zueinander ausgerichtet werden müssen. Die Schwächung der Dekorschicht durch einen in der Trägerschicht vorhandenen Spalt hindurch sichert, dass die beiden die Sollbruchlinie bildenden Schwächelinien in der Trägerschicht (gebildet durch den Spalt) und in der Dekorschicht (gebildet durch eine Aneinanderreihung von Löchern) deckungsgleich übereinander liegen.
Gleich der ersten Gruppe von Verfahren können die Laserparameter optimal auf das Material der Dekorschicht eingestellt werden.

Spalt überbrückende Stege sind in der gattungsbildenden europäischen Patentschrift EP 0 967 066 B1 nicht als zwingend notwendig, sondern nur als vorteilhaft genannt. Sie können mit der Formgebung der mit dem Spalt versehenen Trägerschicht ausgebildet werden oder aber nachträglich, den Spalt überbrückend, an der Trägerschicht angebracht werden. Die Stege sollen die durch den Spalt umrissene Öffnungsklappe gegenüber der umschließenden Trägerschicht stabilisieren.

Ohne Spalt überbrückende Stege müssen zusätzliche Maßnahmen getroffen werden, um die Sollbruchlinie vor einem unbeabsichtigten Zerstören infolge nicht unfallbedingter spontaner Schlageinwirkung seitens des Fahrgastraumes zu schützen.
Hierzu sind jedoch keine Aussagen gemacht.

Zwangsläufig bleibt bei einer Ausbildung des Schlitzes mit Spalt überbrückenden Stegen die Dekorschicht unterhalb des Steges ungeschwächt, wenn, wie hier vorgesehen, eine Schwächelinie nur in die Schlitzbereiche eingebracht wird. Dies kann beim Aufbrechen der Sollbruchlinie in den ungeschwächten Bereichen unterhalb der Stege im Träger in der Dekorschicht zu einem unkontrollierten Reißen führen.

Bei der dritten Verfahrensgruppe wird in den bereits vorgefertigten Schichtaufbau eines Verkleidungsteils eine Sollbruchlinie seitens der Trägerschicht eingebracht. Insbesondere ein pulsbarer Laser mit seinen steuerbaren Laserparametern, Pulsamplitude, Pulsweite und Pulsfrequenz, hat sich hierfür als ein besonders geeignetes Werkzeug herausgestellt, da es über eine Veränderung einer Vielzahl von Verfahrensparametern möglich ist, dessen Wirkung auf das Material angepasst zu beeinflussen, ohne dass das Werkzeug gewechselt werden muss. Aber auch ein kontinuierlich strahlender Laser kann verwendet werden, wenn dessen Laserleistung entsprechend moduliert wird.

Das Bearbeiten eines Schichtaufbaus, wie er für Verkleidungsteile üblich ist, ist über alle Schichten mit konstanten Laserparametern nur im Ausnahmefall möglich.

In den meisten Fällen wäre die Laserleistung, die notwendig ist, um in einer angemessenen Zeit die Trägerschicht zu durchdringen, viel zu hoch, um eine gegebenenfalls vorhandene Zwischenschicht weitmöglichst unbeeinflusst zu erhalten und die Dekorschicht bis auf eine minimale verbleibende Restwandstärke zu schwächen.

Um eine den Ansprüchen genügende Qualität für die Sollbruchlinie zu erreichen, müssen die Laserparameter über die Abtragstiefe an die Eigenschaften der einzelnen aufeinander folgenden Schichten des Schichtaufbaus angepasst werden.

Vorteilhaft wird die Abtragstiefe beziehungsweise die verbleibende Restwandstärke, zumindest bei einer Abtragstiefe bis in die Dekorschicht, überwacht, damit ein vollständiges Durchdringen der Dekorschicht (visuell nicht wahrnehmbare Mikroperforationslöcher sollen hiervon ausgenommen werden) sicher vermieden werden kann und damit die Unsichtbarkeit gewährleistet ist.

In dem Europäischen Patent EP 0 827 802 B1 wird ein solches Verfahren beschrieben.

Zur Durchführung des Verfahrens gemäß dem Europäischen Patent EP 0 827 802 B1 wird ein in der Pulsamplitude, Pulsweite und Pulsfrequenz steuerbarer Laserstrahl auf den Schichtaufbau seitens der Trägerschicht gerichtet. Unterhalb des Schichtaufbaus, seitens der Dekorschicht, ist in Richtung des Laserstrahls ausgerichtet ein Sensor angeordnet, welcher den durch den Schichtaufbau transmittierenden Anteil der Strahlungsenergie des Laserstrahles detektiert. Die Parameter des Detektors und der Laserstrahlungsquelle sind so aufeinander abgestimmt, dass ein erstes Signal dann detektiert wird, wenn die Trägerschicht am Bearbeitungsort vollständig abgetragen ist. Dies setzt voraus, dass die der Trägerschicht folgenden Schichten für die Wellenlänge der Bearbeitungslaserstrahlung teilweise transparent sind.
Die Bearbeitung des Schichtaufbaus beginnt mit einer Pulsart mit hohen Pulsenergien, was ein schnelles Durchdringen der Trägerschicht ermöglicht. Mit der Detektion der ersten Laserstrahlung, welche nach vollständigem Durchdringen der Trägerschicht möglich wird, wird die Pulsart gewechselt, um sie dem Abtragverhalten der Schaumstoffschicht und der Dekorschicht anzupassen.

Insbesondere wird die Pulsdauer kleiner gewählt, was eine geringere thermische Belastung und einen schonenden Abtrag zur Folge hat.

Die EP 0 827 802 B1 zeigt, dass bereits 1998, zum Zeitpunkt dieser Patentanmeldung, erkannt wurde, dass es möglich ist, mittels geeigneter Laserregimes einen Schichtaufbau aus Materialien verschiedener physikalischer Eigenschaften und verschiedener Schichtdicken entlang einer Sollbruchlinie reproduzierbar und definiert so zu schwächen, dass diese mit einer definierten Aufreißkraft geöffnet werden kann.

Wie sich jedoch in der Praxis gezeigt hat, können insbesondere thermisch sehr gering belastbare Zwischenschichten bereits durch die kurzzeitige Einwirkung einer hohen Laserenergie, mit der der Träger bearbeitet wird, beim Durchstoßen der Trägerschicht so großräumig abgetragen werden, dass sie entlang der Sollbruchlinie vollständig verschwinden. Die Dekorschicht, die dann entlang der Sollbruchlinie nicht mehr unterstützt wird, fällt ein, unabhängig davon ob die Schwächelinie in der Dekorschicht durch Sacklöcher oder Mikroperforationslöcher (gemeinsam Löcher genannt) gebildet wird, und wird damit visuell wahrnehmbar.

Eine Erhöhung des Abstandes zwischen den Löchern über die gesamte Länge der Sollbruchlinie, so dass zwischen den Löchern in der Zwischenschicht sicher ein Stützsteg erhalten bleibt, würde die erforderliche Aufreißkraft zu sehr erhöhen.

Es erschließt sich dem Fachmann, dass der gleiche Effekt entsteht, wenn statt einer weichen Zwischenschicht und einer dünnen kompakten Dekorschicht eine Dekorschicht bearbeitet wird, die die Funktionen üblicher genannter Zwischen- und Dekorschichten in sich vereint.

Aus der DE 198 19 573 A1 ist eine Instrumententafel bekannt, bei der über die Länge einer Sollbruchlinie mittels Laser Sacklöcher gebildet werden, welche eine Trägerschicht und eine darüber liegende Zwischenschicht vollständig durchdringen, um innerhalb der abschließenden Dekorschicht zu enden. In der Trägerschicht kann entlang der Sollbruchlinie eine vorgefertigte Nut vorhanden sein.

Bei dem in der DE 102 27 118 A1 offenbarten Verfahren wird im Unterschied zur vorgenannten Schrift der Energieeintrag für die einzelnen Sacklöcher periodisch variiert, um zum einen Sacklöcher zu erhalten, die nur in die Trägerschicht eindringen bzw. diese durchdringen und zum anderen bis in die Dekorschicht reichen. Im Ergebnis bleiben in der Zwischenschicht Stege erhalten, die der Stützung der darüber liegenden Dekorschicht dienen.
Die DE 10 2004 047 634 A1 offenbart eine Instrumententafel gleichen Schichtaufbaus und ein Verfahren zu deren Herstellung, mit einer Sollbruchlinie aus Sacklöchern unterschiedlicher Restwandstärke.

Auch in der WO 99/01317 A1 wird eine Airbagabdeckung und ein Verfahren zu deren Herstellung beschrieben, mit dem gleich den drei vorgenannten Schriften mittels Laser Löcher in einen Schichtaufbau mit einer Trägerschicht, einer Zwischenschicht und einer Dekorschicht eingebracht werden. Die Löcher können sich in unterschiedliche Tiefen erstrecken und durchstoßen hier zum Teil vollständig auch die Dekorschicht.

Bei allen vier vorgenannten Schriften ist eine Trägerschicht entlang der gewünschten Sollbruchlinie nicht nur vorhanden, sondern auch über ihre Länge, wenigstens jedoch über die Längen der zu schwächenden Abschnitte in der Dicke konstant.

Der Erfindung liegt die Aufgabe zu Grunde, ein weiteres Verfahren zu schaffen, mit dem in ein Fahrzeuginnenverkleidungsteil, bestehend aus einer Trägerschicht und einer an diese unmittelbar oder mittelbar über eine Zwischenschicht angrenzende Dekorschicht, eine reproduzierbare Sollbruchlinie definierter Aufreißkraft mittels Laser eingebracht werden kann, die seitens der Dekorschicht visuell nicht wahrnehmbar ist. Dieses Verfahren soll insbesondere geeignet sein für ein Fahrzeuginnenverkleidungsteil mit einer thermisch hoch empfindlichen Zwischenschicht.
Darüber hinaus ist es die Aufgabe der Erfindung, ein Fahrzeuginnenverkleidungsteil, insbesondere mit einer thermisch hoch empfindlichen Zwischenschicht zu schaffen, bei welchem die eine Airbagabdeckung bildende Sollbruchlinie visuell nicht wahrnehmbar ist.

Diese Aufgaben werden für ein Verfahren zur Herstellung eines mindestens zweischichtigen Fahrzeuginnenverkleidungsteils mit integrierter Airbagabdeckung gemäß Anspruch 1 gelöst und für ein Fahrzeuginnenverkleidungsteil gemäß Anspruch 8. Vorteilhafte Ausführungen sind in den Unteransprüchen beschrieben.

Die Erfindung soll nachfolgend mittels einer Zeichnung anhand eines Ausführungsbeispiels näher erläutert werden. Hierzu zeigt:

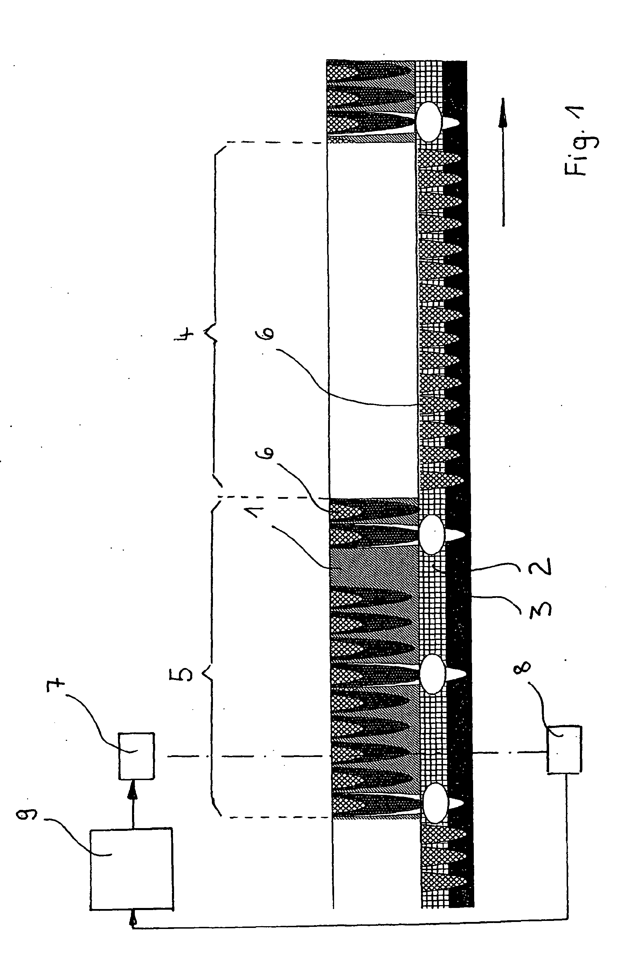

- Fig. 1: ein schematisches Schnittbild durch ein Fahrzeuginnenverkleidungsteil entlang einer Sollbruchlinie

Zur Herstellung eines erfindungsgemäßen Fahrzeuginnenverkleidungsteils, bestehend aus einer Trägerschicht 1 und einer Dekorschicht 3, die entweder unmittelbar oder mittelbar über eine Zwischenschicht 2 an die Trägerschicht 1 angrenzt, wird zuerst die dem Fahrzeuginnenverkleidungsteil seine Form und Steifigkeit gebende Trägerschicht 1 hergestellt. Diese kann beispielsweise aus Kunststoff, z. B. Polypropylen (PP) mit oder ohne Glasfaserverstärkung, oder einem Holzformstoff hergestellt werden. Vorteilhaft wird die Trägerschicht 1 in einem ur- oder umformenden Verfahren hergestellt, bei dem auch bereits entlang der vorgesehenen Schwächelinie Schlitze 4 eingeformt werden. Die Schwächelinie verläuft entlang der Umfangslinie einer oder auch mehrerer eine Airbagabdeckung bildenden Öffnungsklappen. Damit der die Airbagabdeckung bildende Teil der Trägerschicht 1 gegenüber dem umschließenden Rest der Trägerschicht 1 stabil bleibt, wird ein von den Eigenschaften des Trägermaterials und der Trägerschichtdicke beeinflusstes geeignetes Verhältnis zwischen den Schlitzlängen und den dazwischen verbleibenden Steglängen ausgewählt, wobei die Schlitzlängen größer den Steglängen sind.
Die Schlitze 4 können ebenso nachträglich in die ansonsten in ihrer Form fertige Trägerschicht 1 eingebracht werden.

Nach Fertigstellung der geschlitzten Trägerschicht 1 wird die Dekorschicht 3 unmittelbar oder mittelbar über eine Zwischenschicht 2 auf die Trägerschicht 1 aufgebracht. Die Zwischenschicht 2 kann z. B. ein Schaumstoff oder ein Abstandsgewirk sein, welches die Funktion hat, die durch die Dekorschicht 3 gebildete Oberfläche des Verkleidungsteils optisch und taktil weich wirken zu lassen. Als Dekorschicht 3 kommen insbesondere Kunststofffolien, Leder und textile Materialien in Frage.

Ein erfindungsgemäßes Verfahren ist ebenso anwendbar, wenn die Dekorschicht 3 unmittelbar auf die Trägerschicht 1 aufgebracht wird, und insbesondere, wenn eine Dekorschicht 3 verwendet wird, die beschriebene Eigenschaften üblicher Zwischenschichten und Dekorschichten in sich vereint. Ebenso könnten mehrere als eine Zwischenschicht 2 zwischen der Trägerschicht 1 und der Dekorschicht 3 ausgebildet sein.

In dem beschriebenen Ausführungsbeispiel umfasst der Schichtaufbau des Fahrzeuginnenverkleidungsteils die Trägerschicht 1, die Zwischenschicht 2 und die Dekorschicht 3, wobei die Trägerschicht 1 im Bereich der Sollbruchlinie eine Aneinanderreihung von Schlitzen 4 und Stegen 5 darstellt.

In Fig. 1 ist ein schematisches Schnittbild durch den Schichtaufbau eines solchen Fahrzeuginnenverkleidungsteils entlang einer Sollbruchlinie dargestellt, wobei zur klaren Darstellung auf eine korrekte Wiedergabe der Größenverhältnisse verzichtet wurde.

Um eine Sollbruchlinie zu schaffen, die den Anforderungen visuell nicht wahrnehmbar zu sein und eine geringe, definierte und reproduzierbare Aufreißkraft zu besitzen gerecht wird und die gleichzeitig über die Sollbruchlinie eine hinreichende Stabilisierung der Airbagabdeckung zum umschließenden Teil der Trägerschicht 1 gewährleistet, soll die Dekorschicht 3 über die Steg- und Schlitzbereiche mittels Laser 7 durch Löcher (Sacklöcher oder Mikroperforationslöcher) geschwächt werden, deren Abstände zueinander so gewählt sind, dass in der Zwischenschicht 2 ein Stützsteg erhalten bleibt.

Wie bereits an Hand des Standes der Technik erläutert, müssen die Laserparameter an die Materialeigenschaften der einzelnen Schichten angepasst werden, um ein gewünschtes Abtragsergebnis zu erhalten.

Dies muss insbesondere bei der Bearbeitung des Stegbereiches am Schichtübergang zwischen Trägerschicht 1 und Zwischenschicht 2 erfolgen.

Da auf Grund von Materialinhomogenitäten und nicht vermeidbaren Schwankungen der Laserparameter nicht exakt vorhersehbar ist, wann die Abtragstiefe diesen Schichtübergang erreicht, ist eine Anpassung der Laserparameter bei Erreichen dieses Schichtübergangs nur möglich, wenn dieser z. B. durch Detektion transmittierender Strahlung gemäß der EP 0 827 802 B1 erkannt wird, was jedoch eine gewisse Transparenz der Zwischenschicht 2 und der Dekorschicht 3 voraussetzt.

Im beschriebenen Ausführungsbeispiel soll davon ausgegangen werden, dass die Dekorschicht 3 für die Laserstrahlung eine so geringe bzw. keine Transparenz aufweist, so dass ein der Dekorschicht 3 in Strahlungsrichtung nachgeordneter Sensor erst dann einen Anteil der Strahlungsenergie detektiert, wenn die verbleibende Restwandstärke unterhalb des erzeugten Sackloches gegen Null geht beziehungsweise in der Dekorschicht 3 ein Mikroperforationsloch entsteht.

Trifft die Laserstrahlung, nachdem sie die Trägerschicht 1 vollständig durchdrungen hat, mit zu hoher Leistung auf die Zwischenschicht 2, kommt es zu einem übermäßigen und insbesondere nicht reproduzierbaren Ausbrennen der Zwischenschicht 2 um das entstehende Loch. Damit ein Stützsteg in der Zwischenschicht 2 erhalten bleibt, muss daher der Abstand der Löcher zueinander größer gewählt werden, wenn die Lochbildung durch den Träger und die Zwischenschicht 2 hinein in die Dekorschicht 3 erfolgt, als wenn die Lochbildung nur durch die Zwischenschicht 2 in die Dekorschicht 3 hinein erfolgt.

Bei der Bearbeitung des Schlitzbereiches können die Laserparameter von vornherein an die Zwischenschicht 2 optimiert angepasst werden, womit hier das Ausbrennen der Zwischenschicht 2 um die Löcher, soweit überhaupt möglich, vermieden werden kann. Die Lochabstände für in die Dekorschicht 3 reichende Löcher können daher im Schlitzbereich weitaus geringer gewählt werden.

Für die Einbringung von Löchern über die Schlitze 4 (Schlitzbereiche) - der Laser 7 muss hier nur durch die Zwischenschicht 2 in die Dekorschicht 3 eindringen - und über die Stege 5 (Stegbereiche) - der Laser 7 muss erst durch die Trägerschicht 1 dringen, bevor er durch die Zwischenschicht 2 in die Dekorschicht 3 eindringen kann - muss folglich zwingend ein unterschiedliches Laserregime für die Lochbildung angewandt werden.

Ein Laserregime ist jeweils bestimmt durch definierte Pulsfolgen der Laserstrahlung jeweils zur Bildung eines Loches und die Laserabschaltdauer, die in Abhängigkeit von der Bearbeitungsgeschwindigkeit den Abstand der Löcher zueinander festlegt.
Die Pulsfolgen sind in der Regel eine oder mehrere unmittelbar nacheinander wirkende Pulsfolgegruppen, können aber auch eine Folge unterschiedlicher Einzelpulse sein. Eine Pulsfolgegruppe ist eine Anzahl von Pulsen gleicher Pulsamplitude und Pulsweite mit einer bestimmten Pulsfrequenz.
Um unterschiedliche Lochabstände erzeugen zu können, ist die Laserabschaltdauer frei wähl- und variierbar sowohl für das erste Laserregime zur Bearbeitung der Schlitzbereiche als auch für das zweite Laserregime zur Bearbeitung der Stegbereiche.

Für die Erfindung ist es wesentlich, dass die Löcher in den Schlitzbereichen jeweils mit einer gleichen Pulsfolge (Indikatorpulsfolge 6) erzeugt werden, und mit dieser Pulsfolge auch die Locherzeugung eines jeden Loches in den Stegbereichen beginnt.

Für die Lochbildung in den Stegbereichen können den Indikatorpulsfolgen 6 beliebig wählbare Pulsfolgen nachgeschaltet werden, um unterschiedliche Abtragstiefen zu bewirken.

Insbesondere um eine reproduzierbare Materialschwächung und damit eine reproduzierbare Aufreißkraft entlang der Sollbuchlinie zu erreichen, ist es entscheidend, dass das erste und zweite Laserregime an den Übergängen zwischen Stegen 5 und Schlitzen 4 beziehungsweise Schlitzen 4 und Stegen 5 zuverlässig gewechselt werden.

Durch den Beginn einer jeden Lochbildung mit der Indikatorpulsfolge 6 werden diese Übergänge ohne zusätzliche Maßnahmen mittels des Laserregimes selbst erkannt, was für ein erfindungsgemäßes Verfahren wesentlich ist.

Im nachfolgend beschriebenen Ausführungsbeispiel soll von einem Beginn der Sollbruchstelle in einem Schlitzbereich ausgegangen werden, d. h. der Laserbearbeitungskopf ist oberhalb des Ortes eines ersten zu erzeugenden Loches im Schlitzbereich positioniert.
Es ist vorteilhaft, im Schlitzbereich zu beginnen, da hier jedes Loch mit der gleichen Pulsfolge, nämlich der Indikatorpulsfolge 6 bearbeitet wird und somit eine definierte Bearbeitung erfolgt, egal wo genau im Schlitzbereich begonnen wird.

Gemäß dem ersten Ausführungsbeispiel werden die Löcher im Schlitzbereich mit einer Indikatorpulsfolge 6 erzeugt, die eine Pulsfolgegruppe von z. B. fünfzehn aufeinander folgenden Pulsen eines Typs 1 einer vorgegebenen Pulsfrequenz mit einer gleichen Pulsamplitude und gleichen Pulsweite darstellt, um im Schlitzbereich Sacklöcher einer definierten Restwandstärke beziehungsweise Mikroperforationslöcher zu erzeugen.

Bei Anwendung der Indikatorpulsfolge 6 zur Erzeugung der einzelnen Löcher im Schlitzbereich muss eine die Dekorschicht 3 durchdringende Laserenergie spätestens nach dem fünfzehnten Puls von einem in Strahlungsrichtung, der Dekorschicht 3 nachgeordneten Detektor 8 erfasst werden. Der Empfang eines Detektorsignals dient als Entscheidungskriterium dafür, ob die Indikatorpulsfolge 6 tatsächlich zur Erzeugung eines Loches im Schlitzbereich angewendet wurde.

Das heißt, solange die Indikatorpulsfolge 6 tatsächlich im Schlitzbereich angewendet wird, empfängt der Detektor 8 spätestens nach Ablauf des fünfzehnten Pulses Strahlungsenergie. Der Detektor 8 sendet dann jeweils ein Signal an eine Steuereinrichtung 9, welche den Laser 7 abschaltet.

Wird auch nach Ablauf des fünfzehnten Pulses kein Signal detektiert, so ist das ein Hinweis, dass sich der Laser 7 nicht im Schlitzbereich, sondern in einem Stegbereich befindet. Die Steuereinrichtung 9 schaltet dann auf das Laserregime für die Stegbereiche um, welches zur Erzeugung von Löchern im Stegbereich vorgesehen ist.

Das zur Stegbearbeitung vorgesehene Laserregime wird vorzugsweise aus einer Kombination von Sack- und Perforationslöchern gebildet. Im Ausführungsbeispiel folgen einem Perforationsloch vier Sacklöcher. Sacklöcher werden nur durch Pulsfolgegruppen mit Pulsen des Typs 1 und eines Typs 2 erzeugt und enden nach Ablauf der Pulsfolgegruppen vorzugsweise im Grenzbereich von Träger- und Zwischenschicht 1, 2. Damit erstreckt sich nur jedes fünfte Loch im Stegbereich bis in die Dekorschicht 3 und es verbleibt dazwischen jeweils ein Stützsteg, selbst wenn um dieses Loch die Stützschicht großräumig verbrennt.
Das bis in die Dekorschicht 3 reichende Loch wird mit Pulsfolgegruppen von Pulsen des Typs 1, des Typs 2 und eines Typs 3 erzeugt. Die nach Pulstyp 1 folgenden Pulse des Typs 2 zeichnen sich durch eine höhere Energie aus und dienen der schnellen Bearbeitung des Trägers. Der finale Pulstyp 3 ist wieder energieärmer und erlaubt die schonende Bearbeitung der Zwischenschicht 2 und der Dekorschicht 3. Der Laser 7 wird auch hier abgeschaltet, wenn Pulse des Typs 3 ein Signal im Detektor 8 generieren.

Sobald der Laser 7 jeweils an der Position für die nächste Lochbildung angelangt ist, wird er wieder angeschaltet.

Die Bearbeitung des Stegbereiches kann auch ohne Sacklöcher erfolgen, die Abstände der Perforationslöcher werden dann entsprechend größer gewählt.

Ebenso könnten noch andere Kombinationen von Sack- und Perforationslöchern mit Blindpositionen zur Anwendung kommen, wodurch Stabilitätsstege im Träger verbleiben. Zu diesem Zweck wird die Laserabschaltdauer einmalig größer vorgegeben.

Mit dem beschriebenen Verfahren ist es möglich, während der Bearbeitung ohne zusätzliche Mittel die Übergänge zwischen Steg 5 und Schlitz 4 beziehungsweise Schlitz 4 und Steg 5 zu detektieren und ein daraus erhaltenes Detektorsignal zur Steuerung des Laserregimes zu verwenden, um eine reproduzierbare Schwächelinie definierter Aufreißkraft zu erzeugen.

Dem Fachmann auf dem Gebiet dieser Erfindung erschließt sich, dass die Erfindung nicht auf die Einzelheiten der vorstehend beispielhaft angeführten Ausführungsformen beschränkt ist, sondern dass die vorliegende Erfindung in anderen speziellen Formen verkörpert sein kann, ohne vom Umfang der Erfindung abzuweichen, die durch die anliegenden Ansprüche festgelegt ist.

### Aufstellung der verwendeten Bezugszeichen

- 1: Trägerschicht
- 2: Zwischenschicht
- 3: Dekorschicht
- 4: Schlitz
- 5: Steg
- 6: Indikatorpulsfolge
- 7: Laser
- 8: Detektor
- 9: Steuereinrichtung

## Patentansprüche

1. Verfahren zur Herstellung eines Fahrzeuginnenverkleidungsteils mit einer Trägerschicht (1) und einer Dekorschicht (3), die mittelbar über eine Zwischenschicht (2) oder unmittelbar angrenzend mit der Trägerschicht (1) verbunden wird, bei dem vor dem Verbinden der Schichten in die Trägerschicht (1) entlang einer gewünschten Sollbruchlinie eine Anordnung von sich abwechselnden Schlitzen (4) und Stegen (5) erzeugt wird und eine steuerbare, pulsbare Laserstrahlung zum Fahrzeuginnenverkleidungsteil seitens der Trägerschicht (1) entlang der Sollbruchlinie relativ geführt und beim Durchdringen der Sollbruchlinie detektiert wird,
**dadurch gekennzeichnet,**
**dass** die Laserstrahlung entlang der Schlitze (4) mit einem ersten Laserregime und entlang der Stege (5) mit einem zweiten Laserregime in die Dekorschicht (3) Sacklöcher einer definierten Restwandstärke oder Mikroperforationslöcher erzeugt,
indem jede Lochbildung mit einer gleichen Indikatorpulsfolge (6) der Laserstrahlung begonnen wird, mit der im Schlitzbereich spätestens nach deren Ablauf Laserstrahlungsenergie detektiert wird und bei Strahlungsdetektion das erste Laserregime beziehungsweise bei ausbleibender Strahlungsdetektion das zweite Laserregime zur Anwendung gebracht wird, womit automatisch das Laserregime bei einem Übergang zwischen Steg (5) und Schlitz (4) beziehungsweise Schlitz (4) und Steg (5) gewechselt wird.

2. Verfahren nach Anspruch 1, **dadurch gekennzeichnet,**
**dass** die Indikatorpulsfolge (6) eine Pulsfolgegruppe von Pulsen eines Typs 1 ist, mit einer gleichen Pulsamplitude, einer gleichen Pulsweite und einer Pulsfrequenz.

3. Verfahren nach Anspruch 1 oder 2, **dadurch gekennzeichnet,**
**dass** bei einer Lochbildung im Stegbereich der Indikatorpulsgruppe eine Pulsfolgegruppe eines Typs 2 mit Pulsen höherer Energie zur schnellen Bearbeitung der Trägerschicht (1) und eine Pulsfolgegruppe eines Typs 3 mit wieder energieärmeren Pulsen, zur schonenden Bearbeitung einer eventuellen Zwischenschicht (2) und der Dekorschicht (3), nachgeschalten werden und der Laser (7) abgeschaltet wird, wenn Pulse des Typs 3 ein Detektorsignal generieren.

4. Verfahren nach Anspruch 3, **dadurch gekennzeichnet,**
**dass** mit dem zweiten Laserregime für die Stegbereiche zwischen den Löchern, die in der Dekorschicht (3) erzeugt werden, weitere Löcher erzeugt werden, die nur in die Trägerschicht (1) eindringen beziehungsweise nur diese durchdringen.

5. Verfahren nach einem der Ansprüche 1-4, **dadurch gekennzeichnet,**
**dass** das zweite Laserregime Blindpositionen zur Ausbildung von Stabilitätsstegen im Träger (1) beinhaltet.

6. Verfahren nach einem der Ansprüche 1-5, **dadurch gekennzeichnet,**
**dass** mit dem ersten Laserregime Löcher eines geringeren Abstandes zueinander erzeugt werden, als mit dem zweiten Laserregime.

7. Verfahren nach einem der Ansprüche 1-5, **dadurch gekennzeichnet,**
**dass** die Locherzeugung im Schlitzbereich beginnt.

8. Fahrzeuginnenverkleidungsteil mit einer Trägerschicht (1) und einer Dekorschicht (3), die mittelbar über eine Zwischenschicht (2) oder unmittelbar an die Trägerschicht (1) angrenzt, wobei die Trägerschicht (1) entlang einer gewünschten Sollbruchlinie eine Anordnung von sich abwechselnden Schlitzen (4) und Stegen (5) darstellt, **dadurch gekennzeichnet,**
**dass** entlang der Sollbruchlinie in den Stegen (5) und den Schlitzen (4) sich bis in die Dekorschicht (3) erstreckende Sacklöcher einer definierten Restwandstärke beziehungsweise Mikroperforationslöcher vorhanden sind und der Abstand der Löcher in den Schlitzbereichen kleiner ist, als der in den Stegbereichen.

9. Fahrzeuginnenverkleidungsteil nach Anspruch 8, **dadurch gekennzeichnet,**
**dass** in den Stegbereichen zwischen den Löchern weitere Löcher vorhanden sind, die nur in oder durch die Trägerschicht (1) reichen.

## Claims

1. A method for producing an automotive interior trim part, said interior trim part comprising a support layer (1) and a decorative layer (3), said decorative layer (3) being joined indirectly to said support layer (1) by means of an intermediate layer (2) or directly to said support layer (1), said method comprising the steps of: forming a series of alternating slits (4) and ridges (5) along a desired predefined tear seam line in said support layer (1) prior to joining said layers, directing a controllable pulsed laser beam along said predefined tear seam line relative to said automotive interior trim part from the side of said support layer (1) and detecting the laser beam as it penetrates the predefined tear seam line,
**characterised in that** blind holes of a predefined residual wall thickness or microperforation holes are formed in said decorative layer (3) by means of the laser beam along the slits (4) using a first laser regimen, and along the ridges (5) using a second laser regimen,
wherein each hole formation is begun with an identical indicator pulse sequence (6) of the laser beam, with which indicator pulse sequence (6) laser radiation energy is detected in the slit region at the latest after completion of said indicator pulse sequence (6), and wherein, when radiation is detected, the first laser regimen, or in the absence of the detection of radiation energy, the second laser regimen is used, which ensures that the laser regimen is automatically changed when the laser has reached the transitional boundary region between a ridge (5) and a slit (4) and/or between a slit (4) and a ridge (5).

2. The method according to claim 1, **characterised in that** said indicator pulse sequence (6) constitutes a pulse sequence group of pulses of type 1 with an identical pulse amplitude, an identical pulse width and pulse frequency.

3. The method according to claim 1 or 2, **characterised in that**, in order to form a hole in the ridge region, the indicator pulse group is followed by a pulse sequence group of type 2 with pulses of higher energy for the rapid machining of the support layer (1) and by a pulse sequence group of type 3 with pulses of a lower energy for the gentle machining of an optionally existing intermediate layer (2) and the decorative layer (3), and that said laser (7) is switched off when pulses of type 3 generate a detector signal.

4. The method according to claim 3, **characterised in that**, using the second laser regimen, additional holes, which penetrate only into or only through the support layer (1), are produced in the ridge regions between the holes that are produced in the decorative layer (3).

5. The method according to any one of claims 1 to 4, **characterised in that** the second laser regimen comprises blind positions for producing stabilising ridges in the support (1).

6. The method according to any one of claims 1 to 5, **characterised in that** the first laser regimen produces holes more narrowly spaced with respect to one another than the holes produced by means of the second laser regimen.

7. The method according to any one of claims 1 to 5, **characterised in that** the hole formation begins in the slit region.

8. An automotive interior trim part comprising a support layer (1) and a decorative layer (3), said decorative layer (3) being joined to said support layer (1) indirectly via an intermediate layer (2) or directly to the support layer (1), said support layer (1) having a series of alternating slits (4) and ridges (5) along a desired predefined tear seam line, **characterised in that** along the predefined tear seam line, blind holes of a predefined residual wall thickness and/or microperforation holes are present which extend into said decorative layer (3) in the region of the ridges (5) and in the region of the slits (4) and the spacing between said holes in the slit regions is narrower than the spacing in the ridge regions.

9. The automotive interior trim part according to claim 8, **characterised in that** additional holes, which extend only into or only through the support layer (1), are present between the holes in the ridge region.

## Revendications

1. Procédé de fabrication d'un élément d'habillage intérieur de véhicule, ledit élément d'habillage intérieur comprenant une couche de support (1) et une couche décorative (3), cette dernière étant jointe à ladite couche de support (1) ou bien indirectement, au moyen d'une couche intermédiaire (2), ou bien directement, dans lequel procédé une série alternante de fentes (4) et de languettes (5) est réalisée le long d'une ligne désirée de rupture prédéfinie dans ladite couche de support (1) avant de joindre lesdites couches, un faisceau laser pulsé commandable est guidé le long de ladite ligne de rupture prédéfinie relativement audit élément d'habillage intérieur du côté de ladite couche de support (1), ledit faisceau laser étant détecté lorsqu'il pénètre ladite ligne de rupture prédéfinie,
**caractérisé en ce que** des trous borgnes d'une épaisseur de paroi résiduelle définie ou des microperforations sont réalisés dans ladite couche décorative (3) au moyen dudit faisceau laser le long des fentes (4), utilisant un premier régime laser, ainsi que le long des languettes (5) utilisant un deuxième régime laser,
en commençant la réalisation de chaque trou par une même suite d'impulsions indicatrice (6) dudit faisceau laser, au moyen de laquelle de l'énergie de rayonnement laser est détectée dans la région de fente au plus tard après la fin de ladite suite d'impulsions indicatrice (6), et en utilisant le premier régime laser quand un rayonnement a été détecté ou en utilisant le deuxième régime laser quand un rayonnement n'a pas été détecté, ce qui a pour effet de changer automatiquement le régime laser à la transition entre une languette (5) et une fente (4) et/ou entre une fente (4) et une languette (5).

2. Procédé selon la revendication 1, **caractérisé en ce que** ladite suite d'impulsions indicatrice (6) est un groupe d'impulsions consécutives d'un type 1 présentant une même amplitude d'impulsion, une même largeur d'impulsion et une fréquence d'impulsion.

3. Procédé selon la revendication 1 ou 2, **caractérisé en ce que** lors de la réalisation de trous dans le région de la languette, le groupe d'impulsions indicateur est suivi d'un groupe d'impulsions consécutives d'un type 2 présentant des impulsions d'énergie supérieure pour l'usinage rapide de la couche de support (1) et d'un groupe d'impulsions consécutives d'un type 3 présentant des impulsions d'énergie inférieure pour l'usinage doux d'une couche intermédiaire (2) éventuelle et de la couche décorative (3), et **en ce que** le laser (7) est désactivé quand des impulsions du type 3 engendrent un signal détecteur.

4. Procédé selon la revendication 3, **caractérisé en ce que** le deuxième régime laser est utilisé pour réaliser, dans les régions des languettes entre les trous réalisés dans la couche décorative (3), des trous additionnels s'étendant ou bien exclusivement jusqu'à l'intérieur de la couche de support (1) ou bien à travers celle-ci.

5. Procédé selon l'une quelconque des revendications 1 à 4, **caractérisé en ce que** le deuxième régime laser comporte des positions sans usinage pour réaliser des languettes stabilisantes dans le support (1).

6. Procédé selon l'une quelconque des revendications 1 à 5, **caractérisé en ce que** le premier régime laser est utilisé pour réaliser des trous qui sont plus étroitement écartés les uns des autres que les trous réalisés au moyen du deuxième régime laser.

7. Procédé selon l'une quelconque des revendications 1 à 5, **caractérisé en ce que** la réalisation des trous commence dans la région des fentes.

8. Élément d'habillage intérieur de véhicule comprenant une couche de support (1) et une couche décorative (3), cette dernière étant jointe à ladite couche de support (1) ou bien indirectement, au moyen d'une couche intermédiaire (2), ou bien directement, ladite couche de support (1) présentant une série alternante de fentes (4) et de languettes (5) le long d'une ligne désirée de rupture prédéfinie,
**caractérisé en ce qu'**il y a, le long de ladite ligne de rupture prédéfinie, des trous borgnes d'une épaisseur de paroi résiduelle prédéfinie ou des microperforations qui s'étendent jusqu'à l'intérieur de ladite couche décorative (3) dans la région desdites languettes (5) et dans la région des fentes (4), l'écartement entre les trous dans la région des fentes étant inférieur à celui des trous dans la région des languettes.

9. Élément d'habillage intérieur de véhicule selon la revendication 8, **caractérisé en ce qu'**il y a, entre les trous réalisés dans la région des languettes, des trous additionnels s'étendant ou bien exclusivement jusqu'à l'intérieur de la couche de support (1) ou bien exclusivement à travers celle-ci.
